# DEMANDE DE BREVET EUROPEEN

(11) **EP 1 728 822 A1**
(43) Date de publication de la demande: **06.12.2006**
(21) Numéro de dépôt: 05447125.5
(22) Date de dépôt: 30.05.2005
(51) Int. Cl.: C08L 23/08, C08L 23/06, C08K 9/10, C08K 7/24

(54) **Nanocomposite et procédé d'obtention**

(71) Demandeur: Nanocyl S.A., 5060 Sambreville (BE)
(72) Inventeur: Bonduel, Daniel, 7000 Mons (BE); Peeterbroek, Sophie, 1460 Virginal (BE); Alexandre, Michael, 4102 Ougree (BE); Dubois, Philippe, 4260 Ciplet (BE)
(74) Mandataire: Van Malderen, Joëlle

(57) **Abrégé**

La présente invention se rapporte à un nanocomposite comportant une matrice polymérique et des nanotubes de carbone enrobés avec un polymère d'enrobage, lesdits nanotubes enrobés étant dispersés de manière homogène à l'échelle nanoscopique dans la matrice polymérique, ledit polymère d'enrobage desdits nanotubes de carbone et ledit polymère de ladite matrice polymérique n'étant pas miscibles à température ambiante.

## Description

### Objet de l'invention

La présente invention concerne le domaine des matériaux composites et plus particulièrement des nanocomposites. L'invention propose un nanocomposite comprenant une matrice polymérique dans laquelle des nanotubes de carbone enrobés par un polymère d'enrobage, incompatible avec la matrice polymérique à température ambiante, sont dispersés. L'invention propose aussi un procédé d'obtention de ce même nanocomposite.

### Etat de la technique

Parmi les composites à matrice polymère et à charges particulaires on distingue, selon la taille des particules, les microcomposites dont les trois dimensions de la charge sont supérieures ou égales au micromètre, et les nanocomposites pour lesquels une des trois dimensions de la charge est de l'ordre de un à quelques dizaines de nanomètres.

Les nanocomposites ont donné lieu très récemment à un développement de recherches considérables. En effet, ils sont caractérisés par des propriétés remarquables pour des taux de charge relativement faibles, c'est à dire inférieurs à 10% en poids. Ils entraînent une amélioration importante des propriétés mécaniques ou électriques de la matrice polymère et développent un pouvoir retardateur de flamme qui les rendent très intéressants. De plus, contrairement aux renforts de type fibrillaires, ils renforcent la matrice polymère dans toutes les directions de l'espace.

Les nanocomposites comprenant comme charges particulaires des nanotubes de carbone ont déjà été proposés pour différentes applications. Les nanotubes de carbone sont en fait une des formes allotropiques du carbone que l'on peut voir comme un ou plusieurs feuillets de graphites enroulés en cylindre et qui seraient scellés aux extrémités. Ces nanotubes de carbone sont, entre autres, caractérisés par de bonnes propriétés mécaniques puisqu'ils sont quarante fois plus résistants en traction que les fibres de carbone, ils ont par ailleurs de bonnes propriétés électriques à tel point qu'ils ont été proposés pour la fabrication de semi-conducteurs.

En pratique cependant, l'utilisation des nanotubes de carbone comme charges dans des matrices polymères pour fabriquer des nanocomposites se heurte à des difficultés. En effet, il s'avère que, dans les faits, les propriétés avantageuses des nanotubes de carbone ne sont pas toujours transférées aux nanocomposites.

On explique cette donnée par l'aptitude naturelle qu'ont les nanotubes de carbone à s'agréger ensemble par paquets ou « fagots » très stables.

L'homme de l'art est donc confronté à ce problème d'agrégation des nanotubes qui limite leur utilisation dans les nanocomposites et aujourd'hui encore l'homme de l'art reste malheureusement en attente d'une solution efficace qui permettrait d'y remédier.

Pour augmenter la compatibilité des nanotubes de carbones avec la matrice polymère dans laquelle on veut les disperser, on a pensé à les enrober avec un polymère compatible avec cette matrice en se servant des nanotubes de carbone comme support catalytique. Ce procédé est décrit par l'inventeur dans la demande internationale PCT/BE2004/000113.

L'enrobage d'un nanotube de carbone par un polyéthylène haute densité permet par exemple une dispersion homogène desdits nanotubes de carbone à l'échelle nanoscopique dans une matrice de polyéthylène haute densité, ce qui permet d'éviter la formation de fagots de nanotubes de carbone ce qui a pour résultat de réellement transférer les propriétés des nanotubes de carbone aux nanocomposites.

Il est cependant difficile d'effectuer un enrobage sur mesure adapté à chaque matrice polymère. C'est la raison pour laquelle l'inventeur a développé un enrobage spécifique permettant une dispersion à l'échelle nanoscopique dans une matrice polymère chimiquement incompatible avec le polymère d'enrobage.

### Buts de l'invention

La présente invention vise à fournir un procédé permettant d'obtenir des nanotubes de carbone dispersés à l'échelle nanoscopique au sein d'une matrice polymère incompatible avec l'enrobage du nanotube de carbone ainsi que des nanocomposites obtenus par ce procédé.

### Résumé de l'invention

La présente invention divulgue un nanocomposite comportant une matrice polymérique et des nanotubes de carbone enrobés avec un polymère d'enrobage, lesdits nanotubes de carbone enrobés étant dispersés de manière homogène à l'échelle nanoscopique dans la matrice polymérique, ledit polymère d'enrobage desdits nanotubes carbone et ledit polymère de ladite matrice polymérique n'étant pas miscibles à température ambiante.

Selon des modes particuliers de réalisation, l'invention comporte l'une ou plusieurs des caractéristiques suivantes :
- le polymère d'enrobage des nanotubes de carbone est du polyéthylène et la matrice polymérique est un copolymère éthylène - acétate de vinyle (EVA) ;
- le polymère d'enrobage des nanotubes de carbone est du polyéthylène de haute densité (HDPE) et la matrice polymérique est un copolymère polyéthylène-acétate de vinyle (EVA) comportant 28% en poids d'acétate de vinyle.

L'invention divulgue par ailleurs un procédé de fabrication du nanocomposite selon la revendication 1 caractérisé en ce que des nanotubes de carbone enrobés par un polymère d'enrobage sont dispersés de manière homogène à l'échelle nanoscopique dans une matrice polymérique, ledit polymère d'enrobage n'étant pas miscible avec le polymère de la matrice polymérique à température ambiante.

Enfin, l'invention montre l'utilisation de nanotubes de carbone enrobés par un polyéthylène haute densité (HDPE) pour la réalisation d'un nanocomposite selon la revendication 1 comportant une matrice polymérique non-miscible avec ledit polymère d'enrobage (HDPE).

### Définitions

On entend par « dispersion des nanotubes de carbone au sein de la matrice polymère » une dispersion homogène des nanotubes dans ladite matrice telle que la surface de contact entre deux nanotubes de carbone est réduite au minimum et de préférence inférieure à 10%, et de manière particulièrement préférée, inférieure à 1% de la surface totale desdits nanotubes.

On entend par « homogène » une distribution des nanotubes de carbone au sein de la matrice polymère au moins à l'échelle microscopique, et de préférence à l'échelle nanoscopique.

Nous entendons par incompatibilité entre les polymères des polymères qui ne sont pas miscibles à température ambiante. Deux polymères sont réputés non miscibles lorsque, à diverses échelles de mesure, on observe un effet de séparation de phase. Cette séparation de phase peut s'observer à l'échelle micrométrique par observation du mélange au microscope électronique à balayage, laissant souvent apparaître des nodules du polymère minoritaire dans le polymère majoritaire. A l'échelle quasi-moléculaire, la non-miscibilité de deux polymères s'observe par la présence de deux températures de transition vitreuse caractéristiques des deux polymères constituants le mélange. Ces transitions vitreuses peuvent être mesurées par des techniques variées comme la calorimétrie différentielle à balayage ou l'analyse mécanique dynamique.

### Brève description des figures

La figure 1 représente les différentes étapes de préparation pour les nanotubes de carbone enrobés avec pour les étapes (i) et (ii), fixation du cocatalyseur (MAO) et évaporation du solvant (toluène), (iii) fixation du catalyseur n-heptane, Cp₂ZrCl₂, (iv) et (v) Polymérisation de l'éthylène à 2.7 bars et 50°C pour donner un enrobage de polyéthylène haute densité.

La figure 2A représente des nanotubes de carbone multiparois purifiés (MWNT = multi wall nanotubes), observés en microscopie électronique à balayage.

La figure 2B représente des nanotubes de carbone multiparois enrobés de 51% en poids de polyéthylène haute densité, observés en microscopie électronique à balayage.

La figure 2C représente des nanotubes de carbones multiparois enrobés de 83% en poids de polyéthylène haute densité, observés en microscopie életronique à balayage.

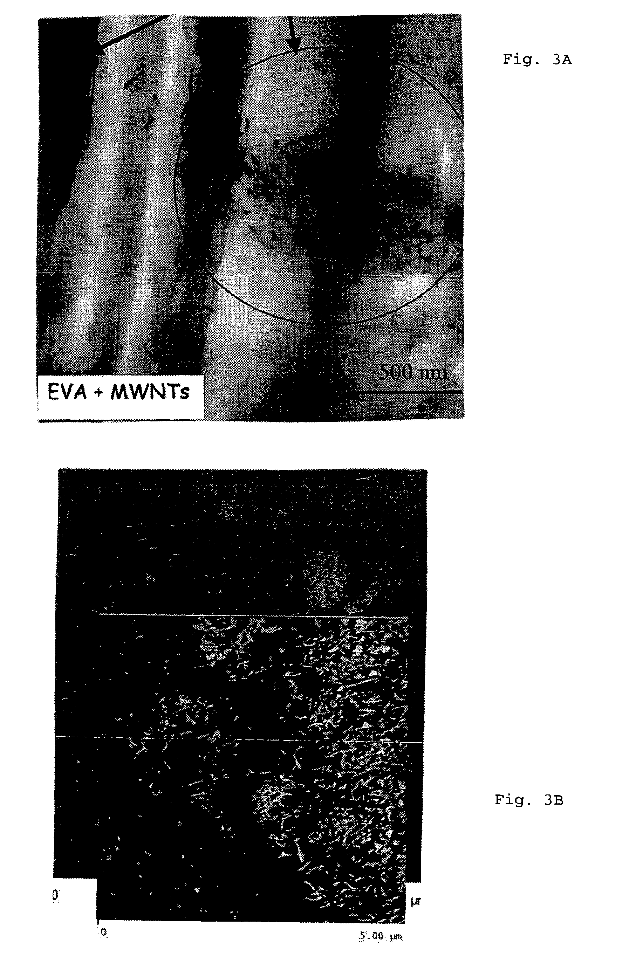

La figure 3A représente des nanotubes de carbone multiparois non enrobés, observés par microscopie électronique à transmission(MET), tels que dispersés dans une matrice copolymère éthylène-acétate de vinyle contenant 28% en poids d'acétate de vinyle (EVA 28). On observe des agrégats de nanotubes de carbone.

La Figure 3B représente le même échantillon tel qu'observé par microscopie à force atomique (AFM). Les agrégats de nanotubes de carbone sont aussi observés.

Les figures 4A (MET) et 4B (AFM) représentent des nanotubes multiparois enrobés de polyéthylène haute densité et dispersés à l'échelle nanoscopique de manière homogène dans une matrice d'EVA 28% de VA.

### Description détaillée de l'invention

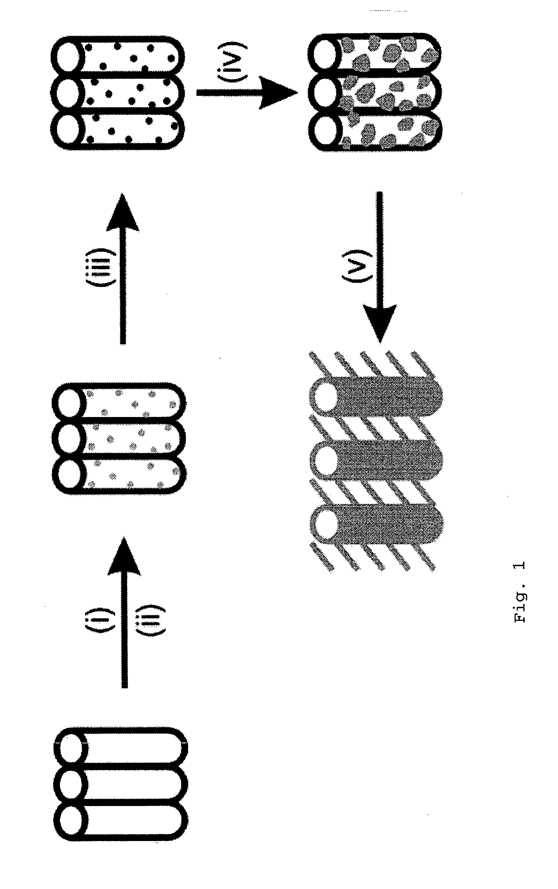

Pour disperser les nanotubes de carbone au sein d'une matrice polymère, ceux-ci sont d'abord enrobés par un polymère d'enrobage selon la technique connue en anglais sous le nom de « Polymerization-Filling Technique » et abrégée par « PFT ». (Voir Figure 1) Ce procédé d'enrobage est décrit en détail dans la demande internationale PCT/BE2004/000113 incorporée par référence.

Au cours de cette étape de polymérisation, on fixe à la surface des nanotubes de carbone préalablement prétraités et se présentant avantageusement sous forme de suspension, un catalyseur connu pour catalyser la polymérisation du monomère à polymériser. On amorce ensuite la polymérisation du monomère directement en surface de cette même charge.

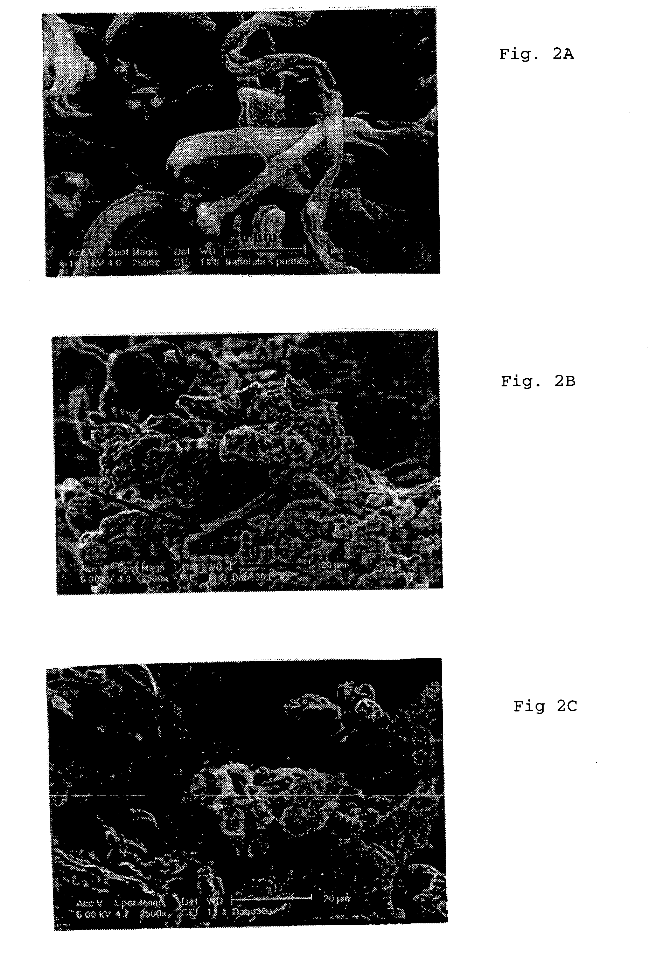

La polymérisation au cours de cette étape permet la désagrégation des fagots qui sont habituellement associés à la formation de nanocomposites comprenant des nanotubes de carbone. Cet enrobage a pour effet de forcer les nanotubes de carbone à se séparer les uns des autres et à provoquer ainsi la désagrégation des fagots de nanotubes. On obtient ainsi au niveau du nanocomposite une dispersion des nanotubes de carbone dans la matrice polymère et cette dispersion est homogène à l'échelle nanoscopique. C'est ainsi que l'on obtient pour l'exemple particulier de l'éthylène un nanocomposite avec une matrice de polyéthylène. (Voir Figures 2B et 2C)

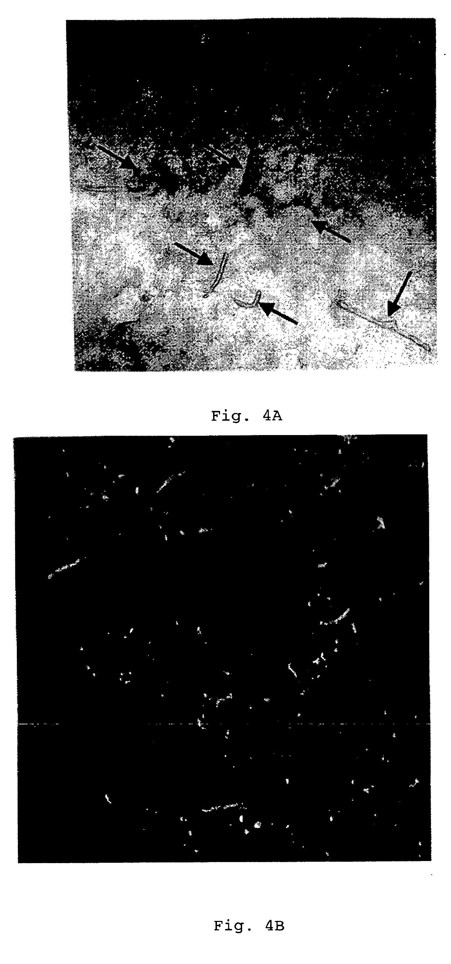

Une fois enrobé, même avec une faible quantité de polymère, le nanotube de carbone peut être dispersé par des méthodes classiques (mélangeur interne, extrudeuse etc.) à une échelle nanoscopique dans un polymère disponible dans le commerce. (voir Figures 4 avec dispersion dans EVA)

### Description d'une forme d'exécution préférée de l'invention

Afin d'illustrer le transfert des propriétés physiques des nanotubes, on peut montrer avec un échantillon commercial de HDPE l'amélioration des propriétés mécaniques obtenues avec les nanotubes enrobés par rapport à ceux qui ne le sont pas. (test de traction, vitesse de traverse de 50mm/min, échantillons préparés par extrusion injection)

| Mélanges | Module de Young (MPa) |
|---|---|
| HDPE seul (MI₂ = 1.1g/10min) | 640 |
| HDPE/1wt% MWNTs bruts sans enrobage | 625 |
| HDPE/1wt% MWNTs bruts Via « *masterbatch* »* | **845** |

| | |
|---|---|
| *Masterbatch contenant -43wt% de HDPE polymérisé in situ selon la méthode PFT. | |

Ce tableau montre clairement l'amélioration du module de Young dans l'échantillon fabriqué à partir de nanotubes de carbone enrobés. La rigidité est donc fortement améliorée lorsque la dispersion se fait à l'échelle nanoscopique. La bonne dispersion étant par ailleurs attendue puisque le polymère d'enrobage est du polyéthylène, de nature identique à la matrice HDPE et donc par principe miscible à elle.

Le but de la présente invention est cependant d'obtenir un nanocomposite avec des nanotubes de carbone dispersés à l'échelle nanoscopique quel que soit la nature de la matrice polymérique.

Pour étudier la dispersion dans des polymères incompatibles à température ambiante, l'inventeur a choisi comme modèle un copolymère éthylène-acétate de vinyle (EVA) à haute teneur en acétate de vinyle (28% en poids).

La non-miscibilité du HDPE et de l'EVA à température ambiante a fait l'objet de nombreuses études et est notamment documentée dans le « Polymer Handbook » 4th edition,Ed J.Wiley and sons , New-York, 1999 dont les auteurs sont J.Bandrup, E.H.Immergut et E.A. Grulke.

L'incompatibilité et la non-miscibilité entre l'EVA et le HDPE sont documentés en détail dans les trois publications suivantes :
- « Dynamic mechanical properties and morphology of polyethylene/ethylene vinyl acetate copolymer blends » de Khonakdar, Wagenknecht, Jafari, Hässler et Eslami dans Advances in Polymer Technology, Vol.23,N°4,307-315.
- « Phase morphology and melt viscoelastic properties in blends of ethylene/vinyl acetate copolymer and metallocece-catalysed linear polyethylene » de Péon, Vega, Del Amo et Martinez dans Polymer 44 (2003) 2911-2918
- « Dynamic Mechanical behaviour of High-Density polyethylene/ethylene vinyl acetate copolymer blends : The effect of the blend ratio, reactive compatibilization, and dynamic vulcanization » de Biju, Varughese, Oommen, Pötschke et Thomas dans Journal of Applied Polymer Science , Vol 87, 2083-2099 (2003)

On peut d'ailleurs affirmer que le polyéthylène n'est pratiquement miscible à aucun autre polymère à température ambiante.

L'utilisation du couple HDPE et EVA permet donc de généraliser le concept à tous les polymères nonmiscibles à température ambiante.

Par ailleurs, l'utilisation du couple HDPE et EVA (28% VA) a permis d'effectuer des essais de dispersion de nanotubes enrobés de HDPE dans la matrice EVA à différentes températures permettant aux deux polymères, soit de se retrouver tous les deux à l'état fondu, soit pour le HDPE d'être toujours à l'état solide et la matrice EVA à l'état fondu. La différence de température de fusion entre le HDPE d'enrobage et la matrice EVA (28%VA) étant d'environ 40°C.

Les essais de dispersion à deux températures différentes ont cependant donné le même résultat au niveau de la dispersion à l'échelle nanoscopique des nanotubes de carbone (voir Figure 4B). On constate donc de manière surprenante que la dispersion se fait également à l'échelle nanoscopique dans une matrice d'EVA à haute teneur en acétate de vinyle alors que l'on se serait attendu, à la lumière de l'incompatibilité entre les deux polymères, à retrouver des agrégats de nanotubes par coalescence des enrobages de HDPE, ce qui n'est pas le cas.

### Exemple

Composites à base d'EVA (28% en poids en acétate de vinyle) propriétés mécaniques. Les propriétés sont comparées à celle d'un nanocomposite avéré, à base d'argile (C1 30B : montmorillonite organo-modifiée par le méthyl bis (2-hydroxyéthyl) suif ammonium) de type exfolié (nanofeuillets d'argile dispersés de manière homogène à l'état nanoscopique)

| | Module Young (MPa) |
|---|---|
| EVA seul | 11.9 |
| EVA + 1wt% Cl. 30B | 16.0 |
| EVA + 3wt% Cl. 30B | 22.8 |
| EVA + 1wt% MWNT | 15.8 |
| EVA +3wt% MWNT | 20.0 |
| EVA +3wt% MWNT* | **29.0** |
| EVA + 3wt% Cl. 30B/wt%MWNT | 26.0 |
| EVA + 3wt% Cl. 30B/wt%MWNT* | **35.4** |

| | |
|---|---|
| *HDPE (45wt%)- MWNT enrobés via PFT MWNT = nanotubes multiparoi | |

Ces résultats montrent à nouveau le transfert des propriétés des nanotubes de carbone enrobés de HDPE à la matrice d'EVA. Comparativement aux nanocomposites avérés, a base d'argile, les nanotubes de carbone enrobés montrent une augmentation du module de Young supérieur, indicatif d'un excellent transfert des propriétés de rigidité des nanotubes de carbone vers la matrice EVA.

## Revendications

1. Nanocomposite comportant une matrice polymérique et des nanotubes de carbone enrobés avec un polymère d'enrobage, lesdits nanotubes de carbone enrobés étant dispersés de manière homogène à l'échelle nanoscopique dans la matrice polymérique, ledit polymère d'enrobage desdits nanotubes carbone et ledit polymère de ladite matrice polymérique n'étant pas miscibles à température ambiante.

2. Nanocomposite selon la revendication 1, **caractérisé en ce que** ledit polymère d'enrobage des nanotubes de carbone est du polyéthylène et que la matrice polymérique est un copolymère éthylène - acétate de vinyle (EVA).

3. Nanocomposite selon la revendication 1, **caractérisé en ce que** ledit polymère d'enrobage des nanotubes de carbone est du polyéthylène de haute densité (HDPE) et que ladite matrice polymérique est un copolymère polyéthylène-acétate de vinyle (EVA) comportant 28 % en poids d'acétate de vinyle.

4. Procédé de fabrication du nanocomposite selon la revendication 1, **caractérisé en ce que** des nanotubes de carbone enrobés par un polymère d'enrobage sont dispersés de manière homogène à l'échelle nanoscopique dans une matrice polymérique, ledit polymère d'enrobage n'étant pas miscible avec le polymère de la matrice polymérique à température ambiante.

5. Utilisation de nanotubes de carbone enrobés par un polyéthylène haute densité (HDPE) pour la réalisation d'un nanocomposite selon la revendication 1, comportant une matrice polymérique non-miscible avec ledit polymère d'enrobage (HDPE).
